# EUROPÄISCHE PATENTANMELDUNG

(11) **EP 1 791 227 A2**
(43) Veröffentlichungstag der Anmeldung: **30.05.2007**
(21) Anmeldenummer: 06017721.9
(22) Anmeldetag: 25.08.2006
(51) Int. Cl.: H01R 13/66, H01R 13/717

(54) **Elektrischer Steckerverbinder**

(30) Priorität: 25.11.2005 DE 202005018574 U
(71) Anmelder: ERICH JAEGER GmbH + Co. KG, 61145 Friedberg (DE)
(72) Erfinder: Wiese, Wolfgang, 61389 Schmitten (DE)
(74) Vertreter: KEIL & SCHAAFHAUSEN Patentanwälte

(57) **Zusammenfassung**

Es wird ein Steckerverbinder zum Anschluss an eine Steckdose für die elektrische Versorgung von gezogenen Fahrzeugen beschrieben, wobei der Steckerverbinder (1, 21, 24, 27) mindestens eine integrierte Leuchte (12) aufweist. Um die Funktion zusätzlicher Fahrzeugaggregate während der Ankopplung eines Anhängers überprüfen zu können, ist die Leuchte (12) als an dem Steckerverbinder (1, 21, 24, 27) festlegbare Signaleinheit (13, 29) zur Anzeige von Betriebszuständen von Fahrzeugaggregaten ausgebildet.

## Beschreibung

Die Erfindung betrifft einen Steckerverbinder zum Anschluss an eine Steckdose für die elektrische Versorgung von gezogenen Fahrzeugen, wobei der Steckerverbinder mindestens eine integrierte Leuchte aufweist.

Derartige Steckerverbinder werden bei Anhängerkupplungen verwendet, um durch ein Zugfahrzeug gezogene Anhänger an die elektrische Versorgung eines Zugfahrzeugs anzuschließen und die Blinkerleuchten, das Rücklicht und das Bremslicht an dem Anhänger in Übereinstimmung mit dem Zugfahrzeug zu betreiben. Dazu sind an dem Zugfahrzeug in der Regel in der Nähe der Anhängerkupplung mehrpolige Steckdosen vorhanden, in die der Steckerverbinder eines Steckers des Anhängers oder eines Steckeradapters zur Herstellung der elektrischen Verbindung zwischen dem Zugfahrzeug und dem Anhänger eingesteckt wird, wenn der Anhänger an das Zugfahrzeug angekoppelt wird.

Zur Überprüfung derartiger elektrischen Kontakte in der Steckdose eines Zugfahrzeugs ist aus der DE 199 12 732 A1 ein Prüfgerät für das elektrische Beleuchtungs- und/oder Bremssystem von Kraftfahrzeugen bekannt, das in eine herkömmliche Steckdose zum Anschluss eines Anhängersteckers eingesteckt werden kann und Kontroll-Lämpchen aufweist, welche die ordnungsgemäße Funktion der durch die Steckdose und den Stecker hergestellten elektrischen Kontakte anzeigen.

In der DE 195 15 890 A1 wird zu einem ähnlichen Zweck eine Steckerverbindung bestehend aus einem Stecker-Steckdose-Paar für Kraftfahrzeuge beschrieben, in welches Kontroll-Lämpchen integriert sind, um nach dem Zustandekommen eines Kontaktes das Fließen von Strom bzw. ein Nicht-Zustandekommen eines gewünschten Kontaktes durch das Aufleuchten bzw. Nicht-Aufleuchten der jeweiligen Kontroll-Lämpchen anzuzeigen. Somit bietet diese Steckerverbindung die Möglichkeit, einen ordnungsgemäßen Anschluss des Steckers eines Anhängers an die Steckdose des Zugfahrzeugs unmittelbar beim Einstecken des Steckers zu überprüfen.

Zunehmend weisen moderne Anhänger jedoch zusätzliche Aggregate, wie beispielsweise ein Antiblockiersystem ABS, ein elektronisches Stabilitätsprogramm ESP, eine eigene Batterieversorgung und/oder intelligente Bremsanlagen mit einer Erfassung des Bremsbelagverschleißes auf. Daher ist es wünschenswert, die Funktion dieser zusätzlichen Fahrzeugaggregate insbesondere des Anhängers während des Ankoppelns des Anhängers mit zu überprüfen.

Die Aufgabe der Erfindung liegt also darin, eine Möglichkeit zur optischen Anzeige der Funktion von Fahrzeugaggregaten vorzusehen.

Diese Aufgabe wird erfindungsgemäß durch die Merkmale des Anspruchs 1 gelöst, indem die in den Steckerverbinder integrierte Leuchte als an dem Steckerverbinder festlegbare Signaleinheit zur Anzeige von Betriebszuständen von Fahrzeugaggregaten ausgebildet ist, welche insbesondere von der durch den Steckerverbinder hergestellten elektrischen Versorgung unabhängig sind.

Dies hat den Vorteil, dass in dem Steckerverbinder zur Herstellung einer elektrischen Versorgung von Zugfahrzeug und Anhänger eine Signaleinheit vorgesehen ist, mit der bestimmte Betriebszustände von Fahrzeugaggregaten insbesondere des anzukoppelnden Anhängers, ggf. auch des Zugfahrzeugs, dargestellt werden können. Durch die Integration dieser modularen, an dem Steckerverbinder festlegbaren Signaleinheit, welche vorzugsweise mehrere Leuchten aufweisen kann, ist es möglich, unabhängig von oder zusätzlich zu der Funktion der durch die Steckerverbindung hergestellten elektrischen Verbindung weitere Eigenschaften der Fahrzeugaggregate zu überprüfen bzw. beim Ankoppeln eines Anhängers anzuzeigen.

Dies können erfindungsgemäß insbesondere Betriebszustände von Fahrzeugaggregaten des Anhängers sein. Beispielsweise können an der Signaleinheit der Zustand eines Antiblockiersystems, eines elektronischen Stabilitätsprogramms, eines Batterieladezustands und/oder eines Bremsbelagverschleißes einer Anhängerbremse angezeigt werden, wozu vorzugsweise zwei oder drei Leuchten vorgesehen werden, die in verschiedenen Kombinationen schaltbar sind.

Dazu kann die als separate Einheit aufgebaute Signaleinheit als Leuchte(n) Leuchtdioden, Lampen und/oder ein ansteuerbares Display, beispielsweise ein LCD-Display, aufweisen, wobei auf letzterem durch entsprechende Ansteuerung verschiedene unterschiedliche Informationen angezeigt werden können. Ferner können in der Signaleinheit eine Leiterplatte bzw. -platine mit elektronischen Bauteilen zur Ansteuerung der Signaleinheit und Anschlusskontakte vorgesehen sein.

Mittels der Anschlusskontakte kann die Anzeigeneinheit über das Anschlusskabel des Anhängers mit den jeweiligen Fahrzeugaggregaten, deren Betriebszustand oder Funktion angezeigt werden soll, und/oder einem entsprechenden Bussystem verbunden werden, so dass in der Anzeigeneinheit auch Betriebszustände von Aggregaten angezeigt werden können, die nicht durch die Steckdose des Zugfahrzeugs elektrisch versorgt werden. Dazu weist eine Anschlussleitung zu dem Steckerverbinder mehr elektrische Leiter auf, als durch die Steckerverbindung zwischen Steckdose und Steckerverbinder tatsächlich genutzt werden.

Auf der Leiterplatine ist neben den Leuchten vorzugsweise auch eine elektronische Schaltung angeordnet, welche die Leuchten schalten und beeinflussen kann. So kann die elektronische Schaltung eine An- oder Abschaltverzögerung aufweisen, um bspw. die Anzeige bestimmter Funktionen von Fahrzeugaggregaten eine gewisse Zeit nach dem Ankoppeln des Anhängers bzw. dem Einstecken des Anhängersteckers in die Steckdose des Zugfahrzeugs wieder zu deaktivieren. Ferner können verschiedene Taktungen vorgesehen sein, um bspw. bei mehreren Leuchten durch bestimmte Leuchtenkombinationen gewisse Funktionen und/oder Fehler einzelner Aggregate anzuzeigen. Bei einer Leuchte können durch unterschiedlich lange An- und Abschaltzeiten einer Leuchte, einen bestimmten Blinkrhythmus oder dgl. auch unterschiedliche Informationen zu einem oder mehreren Fahrzeugaggregaten angezeigt werden. Ferner kann eine Dimmung der Leuchten durch die elektronische Schaltung erfolgen.

Besonders einfach kann eine modulare Signaleinheit an dem Steckerverbinder befestigt werden, wenn die Signaleinheit in eine Öffnung des Steckerverbinders einsetzbar ist.

Ferner kann die Signaleinheit mit dem Steckerverbinder mittels Rasthaken verrastbar sein, wobei die Rasthaken nach außen abstehend von der Signaleinheit vorgesehen sind, um die Signaleinheit in einer Öffnung des Steckerverbinders festzulegen.

Die Signaleinheit kann auch einen insbesondere vorstehenden, die Leuchten der Signaleinheit umgebenden Rand aufweisen, der die Leuchten vor Beschädigungen schützt und gleichzeitig der Abdichtung des Steckerverbinders dienen kann, indem der Rand bspw. eine Dichtung an dem Steckerverbinder fixiert.

Eine besonders einfache Montage der Signaleinheit lässt sich erreichen, wenn diese in einer Kappe des Steckerverbinders festlegbar ist, welche auf den Körper des Steckerverbinders aufsetzbar ist und an diesem befestigt werden kann. In dem Körper des Steckerverbinders, bspw. einer Innenhülse, wird der eigentliche Kontakteinsatz gehalten.

Zum Anschluss der Signaleinheit an ein elektrisches System des Anhängers und/oder des Zugfahrzeugs kann der Steckerverbinder eine Steckkupplung zum Anschließen an die Signaleinheit aufweisen, die insbesondere an an der Signaleinheit vorgesehene Anschlusskontakte angeschlossen werden kann. Durch eine in dem Steckerverbinder zusätzlich vorgesehene Steckkupplung lässt sich eine ggf. auch einfach wieder lösbare elektrische Verbindung zu der Signaleinheit herstellen. Auf diese Weise kann auch ein in dem Anhänger und/oder dem Zugfahrzeug ausgebildetes Bussystem an die Signaleinheit angeschlossen werden.

Der Steckerverbinder kann als Stecker mit einer Schraubkappe mit Dichtung zur Durchführung eines Anschlusskabels oder als Adapter mit einer Steckeinheit ausgebildet sein, an welcher ein weiterer Stecker anschließbar ist.

Gemäß einer besonders bevorzugten Ausführungsform der Erfindung kann der als Stecker oder Adapter ausgebildete Steckerverbinder einen Leuchtring aufweisen, welcher im Bereich der Signaleinheit angeordnet ist und den Steckerverbinder umschließt bzw. umgibt. Der auf den Steckerverbinder aufgesetzte Leuchtring ist vorzugsweise aus einem transparenten Material aufgebaut, so dass ein von der Leuchte erzeugtes Signal am gesamten Steckerumfang sichtbar ist. Der Leuchtring wirkt dann als Lichtleiter, der über seine gesamte Umfangsoberfläche das von der Leuchte erzeugte Licht abstrahlt.

Um die Signalwirkung zu verbessern und die Leuchtintensität zu erhöhen, kann sich die Leuchte bis in den Leuchtring erstrecken, so dass die Einkopplung des von der Leuchte erzeugten Lichts in den Lichtring optimiert wird. Ferner können mehrere Leuchten der Signaleinheit derart angeordnet werden, dass für jede Leuchte ein separater Leuchtring vorgesehen wird, um bspw. das verschiedenfarbige Licht mehrerer Leuchten in dem Leuchtring nicht zu vermischen.

Eine andere Möglichkeit, um die Signaleinheit gut ablesen zu können, liegt darin, die Signaleinheit an einer der Kontaktseite des Steckerverbinders gegenüberliegenden Seite auszubilden, insbesondere benachbart zu der Schraubkappe zur Durchführung eines Anschlusskabels. In dieser Position ist die Signaleinheit bei einer üblichen Steckerhandhabung sehr gut erkennbar.

Die vorliegende Erfindung basiert also auf dem Gedanken, dass es überraschender Weise möglich ist, in einen möglichst klein zu gestaltenden Steckerverbinder eine zusätzliche Anzeige einzubringen, die bereits bei dem Anschluss eines Anhängers an ein Zugfahrzeug die ordnungsgemäße Funktion von Fahrzeugaggregaten insbesondere des Anhängers, aber auch des Zugfahrzeugs anzeigen kann.

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbezügen.

Es zeigen:
- Fig. 1: eine Seitenansicht eines erfindungsgemäßen Steckerverbinders gemäß einer ersten Ausführungsform;
- Fig. 2: einen Längsschnitt durch den Steckerverbinder gemäß Fig. 1;

- Fig. 3: einen Schnitt entlang der Linie A-A gemäß Fig. 1;
- Fig. 4: eine Ansicht auf die Kappe eines Steckerverbinders entlang der Linie B-B gemäß Fig. 1;
- Fig. 5a: eine Seitenansicht der erfindungsgemäßen Signaleinheit;
- Fig. 5b: eine Draufsicht auf die Signaleinheit gemäß Fig. 5a;
- Fig. 5c: einen Schnitt durch die Signaleinheit entlang der Linie C-C gemäß Fig. 5b;
- Fig. 6: eine zweite Ausführungsform des erfindungsgemäßen Steckerverbinders in der Seitenansicht;
- Fig. 7: eine dritte Ausführungsform des erfindungsgemäßen Steckerverbinders in der Seitenansicht;
- Fig. 8: eine Rückansicht des Steckerverbinders gemäß Fig. 7;
- Fig. 9: eine vierte Ausführungsform des erfindungsgemäßen Steckerverbinders in der Seitenansicht und
- Fig. 10: ein Schnitt durch den Steckerbinder entlang der Linie Y-Y gemäß Fig. 9.

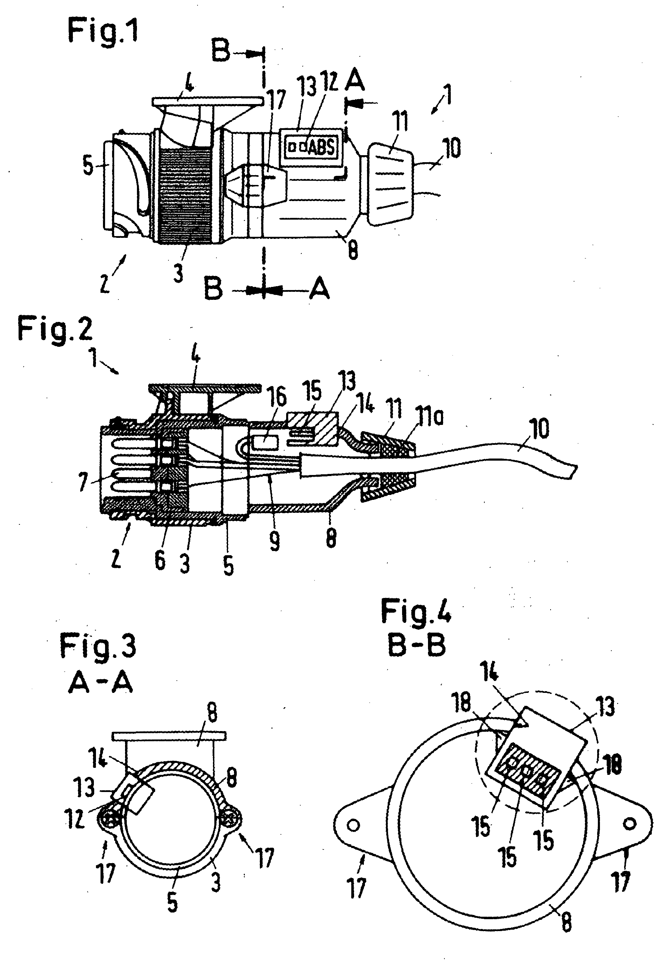

In Fig. 1 ist ein als Stecker 1 ausgebildeter Steckerverbinder dargestellt, der in eine nicht gezeigte Steckdose eingesteckt werden kann. Der Stecker schließt das elektrische System eines Anhängers an das elektrische System eines Zugfahrzeugs an. Zur Verbindung mit der an dem Zugfahrzeug angeordneten Steckdose kann der Stecker 1 über einen Bajonettverschluss 2, der einen drehbar gelagerten Bajonettring 3 aufweist, in bekannter Weise sicher mit der Steckdose verbunden werden. An dem Bajonettring 3 ist eine Deckelauflageplattform 4 angebracht, auf die ein Schutzdeckel der Steckdose des Zugfahrzeugs aufgelegt werden kann, wenn der Stecker 1 in die Steckdose eingesteckt ist.

Der Bajonettring 3 ist auf einer Innenhülse 5 drehbar angeordnet in welcher ein Kontakteinsatz 6 mit den Steckerkontakten 7 festgelegt ist (vgl. Fig. 2). An der den Steckerkontakten 7 abgewandten Seite der Innenhülse 5 schließt sich eine Kappe 8 an, in der Zuleitungen 9 eines Anschlusskabels 10 zu den Steckerkontakten 7 geführt werden. An ihrem der Innenhülse 5 gegenüberliegenden Ende weist die Kappe 8 eine auf die Kappe 8 aufgeschraubte Schraubkappe 11 zur Durchführung des Anschlusskabels 10 auf. Um das Innere des Steckers 1 abzudichten, ist in der Schraubkappe eine Dichtung 11 a vorgesehen, die an dem Anschlusskabel 10 und der Kappe 8 anliegt.

In den Stecker 1 sind zwei Leuchten 12 bspw. in Form von Leuchtdioden integriert, die als an dem Steckerverbinder 1 festlegbare Signaleinheit 13 zur Anzeige von Betriebszuständen von Fahrzeugaggregaten ausgebildet sind.

Auf der Signaleinheit 13 sind insbesondere die Betriebszustände von Fahrzeugaggregaten eines nicht dargestellten Anhängers anzeigbar, beispielsweise eines Antiblockiersystems, eines elektronischen Stabilitätsprogramms, eines Batterieladezustands und/oder eines Bremsbelagverschleißes an dem Anhänger. Ggf. kann auch die Funktion anderer Anhänger und/oder Zugfahrzeugaggregate, bspw. eines Kühlaggregats oder dgl., angezeigt werden.

Die Signaleinheit 13 ist in einer Öffnung 14 der Kappe 8 des Steckers 1 angeordnet und als kompaktes Gerät aufgebaut.

In dem innerhalb der Kappe 8 liegenden Teil der Signaleinheit 13 sind Anschlusskontakte 15 vorgesehen, auf die eine Steckkupplung 16 zum elektrischen Anschluss der Signaleinheit 13 aufgesteckt werden kann. Die Steckkupplung 16 ist über Zuleitungen 9 des Anschlusskabels 10 mit dem elektrischen System des Anhängers verbunden. Die entsprechenden Zuleitungen 9 können dabei an ein in dem Anhänger vorgesehenen Bussystem angeschlossen sein oder unmittelbar mit den überwachten Fahrzeugaggregaten in Verbindung stehen.

Fig. 3 zeigt einen Teilschnitt entlang der Linie A-A gemäß Fig. 1 durch die Kappe 8 sowie eine Rückansicht auf die Innenhülse 5 und den Bajonettring 3, an dem die Deckelauflageplattform 4 angebracht ist. In der Öffnung 14 ist die Signaleinheit 13 derart angeordnet, dass die Oberseite mit den Leuchten 12 von außen gut sichtbar ist und die Anzeigeneinheit 13 im Inneren der Kappe 8 einen ausreichend großen Durchgang für die Zuleitungen 9 des Anschlusskabels 10 lässt. Auf einander gegenüberliegenden Seiten der Innenhülse 5 und der Kappe 8 sind einander entsprechende Verschraubungen 17 an der Innenhülse 5 und der Kappe 8 vorgesehen, durch welche die Innenhülse 5 und die Kappe 8 aneinander festgelegt werden können.

Fig. 4 zeigt eine Ansicht in die geöffnete Kappe 8 mit den nach außen von der Kappe 8 vorstehenden Verschraubungen 17. Im Bereich der Signaleinheit 13 ist die Kappe 8 von einer in den Abmessungen an die Signaleinheit 13 angepassten Öffnung 14 durchbrochen, so dass die Signaleinheit 13 in diese Öffnung 14 eingepasst ist und sich aus dem Inneren der Kappe 8 bis in den Außenraum um die Kappe 8 herum erstreckt. Im Inneren der Signaleinheit 13 sind die Anschlusskontakte 15 zum Anschluss der Steckkupplung 16 ausgebildet. Um die Signaleinheit 13 an der Kappe 8 festzulegen, sind an den Seitenrändern der Signaleinheit 13 vorstehende Rasthaken 18 ausgebildet, die von der Innenseite an der Innenfläche der Kappe 8 anliegen und die Signaleinheit 13 dort fixieren. Dazu kann ein in Fig. 4 nicht dargestellter Rand der Signaleinheit 13 nach außen von der Signaleinheit zumindest bereichsweise vorstehen, so dass die Signaleinheit 13 durch die Rasthaken 18 und den vorstehenden Rand an der Wandung der Kappe 8 festgeklemmt ist. Alternativ können auch von außen an der Kappe 8 anliegende Rasthaken vorgesehen werden, um die Signaleinheit 13 in die Öffnung 14 der Kappe 8 einrasten zu können.

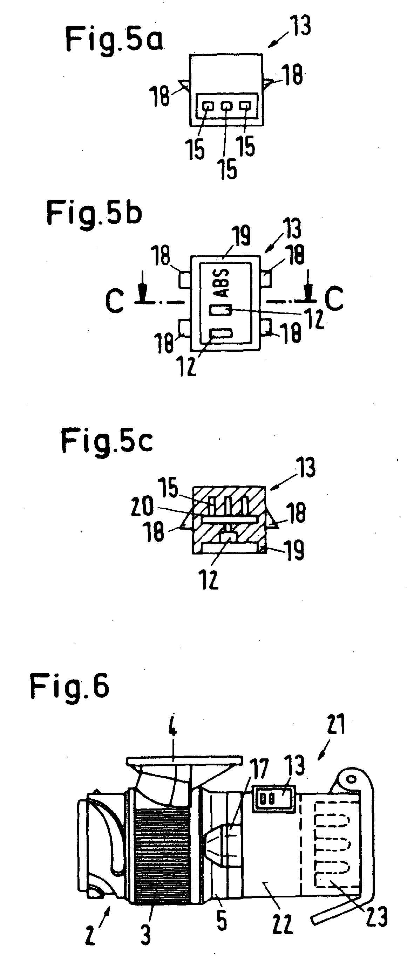

In den Fig. 5a bis 5c ist die Signaleinheit als modulare Geräteeinheit gesondert ohne den Stecker 1 dargestellt, wobei Fig. 5a der Darstellung der Signaleinheit 13 in dem gestrichelten Kreis der Fig. 4 entspricht. Fig. 5b zeigt eine Draufsicht auf die Signaleinheit 13 in der von außen an dem Stecker 1 erkennbaren Form. Die Signaleinheit 13 weist auf zwei gegenüberliegenden Außenseiten der Signaleinheit insgesamt vier Rasthaken 18 auf, die eine sichere Fixierung der Signaleinheit an der Kappe 8 ermöglichen. Im Zentrum der Signaleinheit 13 sind mehrere Leuchten 12 in Form von Leuchtdioden angeordnet, die von einem diese schützenden Rand 19 umgeben sind.

Wie Fig. 5c zu entnehmen, steht der Rand 19 über die Leuchten 12 vor, um diese im Betrieb zu schützen. Den Rastnasen 18 gegenüberliegende Ausdehnungen des Randes 19 sind auch in Fig. 5c nicht dargestellt, die ein Schnitt entlang der Linie C-C gemäß Fig. 5b ist. Im Inneren der Signaleinheit 13 sind die Leuchten 12 an eine Leiterplatte 20 angeschlossen, auf der zur Ansteuerung der Leuchten 12 benötigte elektronische Bauteile in Form einer elektronischen Schaltung angeordnet sind. Ferner ist die Leiterplatte 20 mit den Anschlusskontakten 15 verbunden. Die Signaleinheit 13 stellt damit eine kompakte, in sich geschlossene Anzeige dar, die modular in den Stecker 1 eingepasst und durch eine einfache Steckkupplung 16 zur Ansteuerung elektrisch angeschlossen werden kann.

In Fig. 6 ist eine zweite Ausführungsform eines als Adapter ausgebildeten Steckerverbinders 21 dargestellt, dessen Anschlussbereich wie bei dem in den Fig. 1 bis 4 dargestellten Stecker 1 aufgebaut ist und daher mit denselben Bezugszeichen versehen und nicht näher beschrieben wird. Die Kappe 22 des Adapters 21 enthält die wie zuvor beschrieben aufgebaute Anzeigeneinheit 13 in einer geeigneten Öffnung und entspricht insoweit der in Bezug auf den Stecker 1 beschriebenen Kappe 8.

Lediglich anstelle der Schraubkappe 11 zur Durchführung des Anschlusskabels 10 ist bei dem Adapter 21 in der Kappe 22 eine Steckeinheit 23 ausgebildet, die in Form einer Steckdose gestaltet ist und an die ein weiterer Stecker anschließbar ist. Dabei sind entsprechende Kontakte der Steckeinheit 23 mit der Signaleinheit 13 verbunden, um die Funktionen von Betriebszuständen bestimmter Fahrzeugaggregate anzeigen zu können.

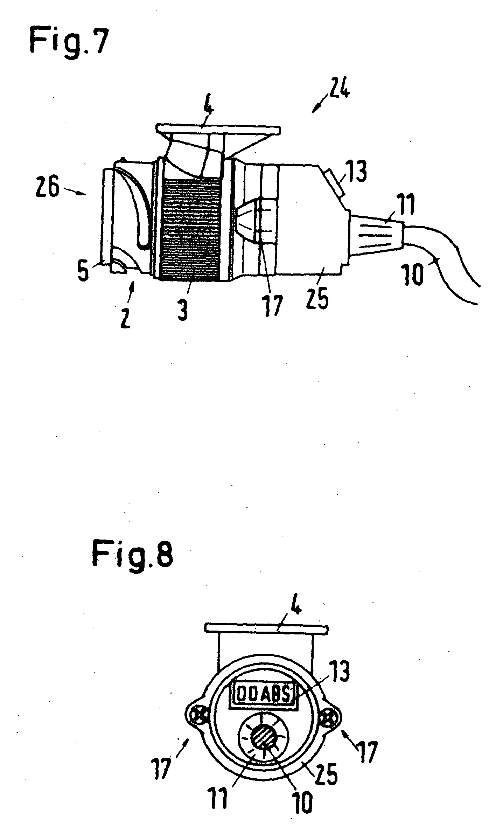

In den Fig. 7 und 8 sind als Seiten- bzw. Rückansicht eine dritte Ausführungsform eines als Stecker 24 ausgebildeten Steckerverbinders dargestellt, der bis auf die Gestaltung der Kappe 25 dem Stecker 1 gemäß der ersten Ausführungsform entspricht und daher nachfolgend nicht näher beschrieben wird. Die Kappe 25 gemäß der dritten Ausführungsform ist derart gestaltet, dass die Signaleinheit 13 an einer der Kontaktseite 26 des Steckers 24 gegenüberliegenden Seite benachbart zu der Schraubkappe 11 zur Durchführung des Anschlusskabels 10 ausgebildet ist. Dabei ist die Kappe 25 im Bereich der Signaleinheit 13 abgeschrägt, so dass die Signaleinheit 13 besonders gut abgelesen werden kann.

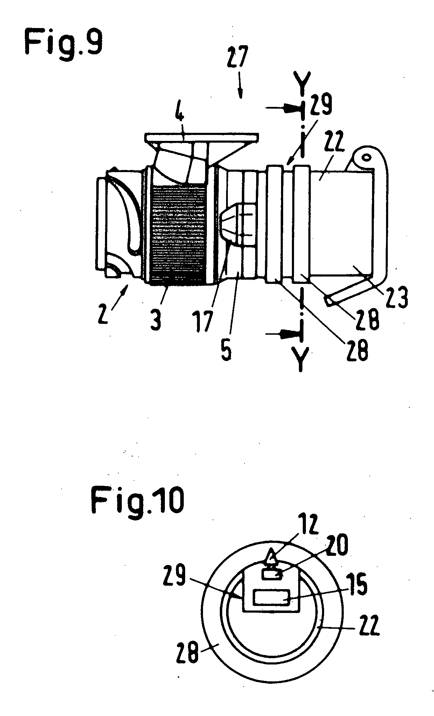

Eine weitere, im Grundaufbau im Wesentlichen der dritten Ausführungsform gemäß Fig. entsprechende Ausführungsform des Steckerverbinders in Form eines Adapters 27 ist in Fig. 9 dargestellt. Insoweit wird auf die vorstehende Beschreibung Bezug genommen.

Der Adapter 27 unterscheidet sich im Hinblick auf die Signaleinheit 29 von dem Adapter 21. Die Signaleinheit 29 weist zwei Leuchtringe 28 aus transparentem Material auf, welche im Bereich der Signaleinheit 29 um die Kappe 22 des Adapters 27 angeordnet sind, wobei jeweils ein Leuchtring 28 einer Leuchte 12 der Signaleinheit 29 zugeordnet ist. Der Leuchtring ist aus einem transparenten, lichtleitenden Material aufgebaut und strahlt das eingekoppelte Licht über seine gesamte Umfangsfläche ab, so dass das Licht einer Leuchte 12 über den gesamten Umfang des Adapters 27 erkennbar ist. Dieselbe oder eine entsprechende Annordung kann natürlich auch bei einem Stecker gemäß den Fig. 1 bis 4 oder Fig. 7 und 8 realisiert werden.

Fig. 10, welche einen Schnitt entlang der Linie Y-Y gemäß Fig. 9 darstellt, zeigt die Signaleinheit 29 und den die Kappe 22 ungebenden Leuchtring 28. Um eine gute Einkopplung des Lichts in den Leuchtring zu erreichen, ist eine Leuchte 12 der Signaleinheit 29 derart angeordnet, dass sie bis in den Leuchtring 28 hineinragt. Daher kann die Signaleinheit 29 bei dieser Ausführungsform besonders einfach fixiert werden, indem die Signaleinheit 29 im Bereich der Leuchte 12 oder benachbart dazu durch Verkleben, Einrasten oder dgl. an dem um die Kappe 22 herum angeordneten Leuchtring 28 festgelegt wird.

Wie Fig. 9 zu entnehmen, sind für zwei separate Leuchten 12 jeweils ein eigener Leuchtring vorgesehen, damit die Anzeigen durch die beiden Leuchten 12 der Signaleinheit 29 optisch gut voneinander unterschieden werden können.

### Bezugszeichenliste:

- 1: Steckerverbinder, Stecker
- 2: Bajonettverschluss
- 3: Bajonettring
- 4: Deckelauflageplattform
- 5: Innenhülse
- 6: Kontaktsatz
- 7: Steckerkontakte
- 8: Kappe
- 9: Zuleitungen
- 10: Anschlusskabel
- 11: Schraubkappe
- 11a: Dichtung
- 12: Leuchte
- 13: Signaleinheit
- 14: Öffnung
- 15: Anschlusskontakte
- 16: Steckkupplung
- 17: Verschraubung
- 18: Rasthaken
- 19: Rand
- 20: Leiterplatte
- 21: Steckerverbinder, Adapter
- 22: Kappe
- 23: Steckeinheit
- 24: Steckerverbinder, Stecker
- 25: Kappe

- 26: Kontaktseite
- 27: Steckerverbinder, Adapter
- 28: Leuchtring
- 29: Signaleinheit

## Patentansprüche

1. Steckerverbinder zum Anschluss an eine Steckdose für die elektrische Versorgung von gezogenen Fahrzeugen, wobei der Steckerverbinder (1, 21, 24, 27) mindestens eine integrierte Leuchte (12) aufweist, **dadurch gekennzeichnet, dass** die Leuchte (12) als an dem Steckerverbinder (1, 21, 24, 27) festlegbare Signaleinheit (13, 29) zur Anzeige von Betriebszuständen von Fahrzeugaggregaten ausgebildet ist.

2. Steckerverbinder nach Anspruch 1, **dadurch gekennzeichnet, dass** an der Signaleinheit (13, 29) Betriebszustände von Fahrzugaggregaten eines Anhängers anzeigbar sind, insbesondere des Antiblockiersystems, des elektronischen Stabilitätsprogramms, des Batterieladezustands und/oder des Bremsbelagverschleißes.

3. Steckerverbinder nach Anspruch 1 oder 2, **dadurch gekennzeichnet, dass** die Signaleinheit (13, 29) als Leuchte (12) Leuchtdioden, Lampen und/oder ein ansteuerbares Display, eine Leiterplatte (20) und Anschlusskontakte (15) aufweist.

4. Steckerverbinder nach einem der vorhergehenden Ansprüche, **dadurch gekennzeichnet, dass** die Signaleinheit (13, 29) eine elektronische Schaltung zum Schalten und/oder Beeinflussen einer Leuchte (12) aufweist, in welcher insbesondere eine An- oder Abschaltverzögerung, eine Taktung und/oder eine Dimmung der Leuchte (12) implementiert ist.

5. Steckerverbinder nach einem der vorhergehenden Ansprüche, **dadurch gekennzeichnet, dass** die Signaleinheit (13, 29) in eine Öffnung (14) des Steckerverbinders (1, 21, 24, 27) einsetzbar ist.

6. Steckerverbinder nach einem der vorhergehenden Ansprüche, **dadurch gekennzeichnet, dass** die Signaleinheit (13, 29) mit dem Steckerverbinder (1, 21, 24, 27) mittels Rasthaken (18) verrastbar ist.

7. Steckerverbinder nach einem der vorhergehenden Ansprüche, **dadurch gekennzeichnet, dass** die Signaleinheit (13) einen vorstehenden, die Leuchte (12) umgebenden Rand (19) aufweist.

8. Steckerverbinder nach einem der vorhergehenden Ansprüche, **dadurch gekennzeichnet, dass** die Signaleinheit (13, 29) in einer Kappe (8, 22, 25) des Steckerverbinders (1, 21, 24, 27) festlegbar ist.

9. Steckerverbinder nach einem der vorhergehenden Ansprüche, **dadurch gekennzeichnet, dass** der Steckerverbinder (1, 21, 24, 27) eine Steckkupplung (16) zum Anschließen an die Signaleinheit (13, 29) aufweist.

10. Steckerverbinder nach einem der vorhergehenden Ansprüche, **dadurch gekennzeichnet, dass** der Steckerverbinder als Stecker (1, 24) mit einer Schraubkappe (11) mit Dichtung (11a) zur Durchführung eines Anschlusskabels (10) ausgebildet ist.

11. Steckerverbinder nach einem der Ansprüche 1 bis 9, **dadurch gekennzeichnet, dass** der Steckerverbinder als Adapter (21, 27) mit einer Steckeinheit (23) ausgebildet ist, an welche ein weiterer Stecker anschließbar ist.

12. Steckerverbinder nach einem der vorhergehenden Ansprüche, **dadurch gekennzeichnet, dass** der Steckerverbinder (27) einen Leuchtring (28) aufweist, welcher im Bereich der Signaleinheit (29) angeordnet ist und den Steckerverbinder (27) umschließt.

13. Steckerverbinder nach Anspruch 12, **dadurch gekennzeichnet, dass** sich die Leuchte (12) bis in den Leuchtring (28) erstreckt.

14. Steckerverbinder nach einem der vorhergehenden Ansprüche, **dadurch gekennzeichnet, dass** die Signaleinheit (13) an einer der Kontaktseite (26) des Steckerverbinders (24) gegenüberliegenden Seite, insbesondere benachbart zu der Schraubkappe (11) zur Durchführung eines Anschlusskabels (10), ausgebildet ist.
